# EUROPÄISCHE PATENTSCHRIFT

(11) **EP 0 902 719 B1**
(45) Veröffentlichungstag und Bekanntmachung des Hinweises auf die Patenterteilung: **05.09.2001**
(21) Anmeldenummer: 97923044.8
(22) Anmeldetag: 09.05.1997
(51) Int. Cl.: B01D 39/04, A61L 2/16, C10M 173/00, D21H 21/36

(54) **VERWENDUNG VON TIEFENFILTERN ZUR BEHANDLUNG VON KÜHLSCHMIERSTOFFEN**
USE OF DEEP-BED FILTERS FOR TREATING COOLING LUBRICANTS
UTILISATION DE FILTRES A LIT PROFOND POUR LE TRAITEMENT DES REFRIGERANTS LUBRIFIANTS

(30) Priorität: 20.05.1996 DE 19620084
(43) Veröffentlichungstag der Anmeldung: 24.03.1999
(73) Patentinhaber: BASF AKTIENGESELLSCHAFT, 67056 Ludwigshafen (DE); SCHENK FILTERBAU GMBH, 73550 Waldstetten (DE)
(72) Erfinder: LANG, Siegfried, D-67071 Ludwigshafen (DE); FUSSNEGGER, Bernhard, D-67489 Kirrweiler (DE); LAPPAS, Michael, D-67269 Grünstadt (DE); OECHSLE, Dietmar, D-73529 Schwäbisch Gmünd (DE); FEIFEL, Klaus, D-73529 Schwäbisch Gmünd (DE); ZEILER, Martin, D-73529 Schwäbisch Gmünd (DE)
(86) Internationale Anmeldenummer: EP9702390
(87) Internationale Veröffentlichungsnummer: WO9744116

(56) Entgegenhaltungen:
- EP-A- 0 217 597
- WO-A-95/16511
- DE-A- 2 462 073

## Beschreibung

Die vorliegende Erfindung betrifft die Verwendung von Tiefenfiltern,
auf Basis von Fasermaterialien,
enthaltend
Crospovidone-Iod oder Crospovidone-Wasserstoffperoxid als biocide Substanz,
wobei die biocide Substanz partikulär zwischen den Fasern eingebettet ist,
zur Behandlung von Kühlschmierstoffen gegen Mikroorganismen.

Tiefenfiltermedien als Schichten- oder Anschwemm-Materialien dienen zur mechanischen und/oder adsorptiven Abscheidung von Partikeln in einem dreidimensionalen Filtergefüge. Sie setzen sich vorwiegend zusammen aus natürlichen und/oder synthetischen Fasern sowie gegebenenfalls körnigen Materialien, die zu einer großen inneren Oberfläche beitragen.

Aus der WO-A-95 16 511 ist bekannt, daß Tiefenfilter, die Crospovidone-Iod oder Crospovidone-H₂O₂ als biocide Substanz enthalten, zur Abtötung von Bakterien oder Viren in biologischen, pharmazeutischen Präparaten oder Wasser geeignet sind.

Die Verwendung von Kühlschmierstoffen ist in vielen Bereichen der Industrie und insbesondere in der metallverarbeitenden Industrie unverzichtbar. Ohne den Einsatz von Kühlschmierstoffen sind die heute sehr leistungsfähigen mechanischen Bearbeitungsverfahren nicht durchführbar; sie müssen den ständig steigenden Anforderungen ihrer Zusammensetzung entsprechend verändert und angepaßt werden. Zur Verringerung der Reibung zwischen Werkzeug und Werkstück und damit zur Begrenzung des Werkzeugverschleißes und zur Minderung der Zerspanungs- oder Umformenergie, aber auch zur Gewährleistung einer bestimmten Oberflächengüte müssen bei Zerspanungs- oder Umformvorgängen oder bei sonstigen Oberflächenbearbeitungen Kühlschmierstoffe eingesetzt werden. Weiterhin muß in bestimmten Fällen bei Bearbeitungsvorgängen Reibungswärme abgeführt werden. Der Kühlschmierstoff muß dann in der Lage sein, die entstehende Wärme aufzunehmen und so für die notwendige Kühlung zu sorgen.

Ergänzend zu diesen Hauptaufgaben haben Kühlschmierstoffe noch eine Reihe von Nebenaufgaben zu erfüllen wie z.B. Späneabfuhr oder Korrosionsschutz. Sie müssen daher verschiedene Eigenschaften besitzen, die auf das Einsatzverfahren und die damit verbundenen Verfahrensparameter (z.B. Schnittgeschwindigkeit, Bearbeitungstemperatur) abzustimmen sind, weshalb eine große Zahl von Kühlschmierstoffen mit unterschiedlichen chemischen Zusammensetzungen zum Einsatz kommt.

Der Begriff "Kühlschmierstoff" bezeichnet als Basisflüssigkeit im allgemeinen flüssige Kohlenwasserstoffverbindungen mit unterschiedlichen Eigenschaften und Aufgaben, die je nach ihrer Verwendung weitere Stoffe enthalten. In der DIN 51 385 werden die Kühlschmierstoffe daher nach ihrer Verwendung definiert und eingeteilt. In der Praxis genügt meist eine Einteilung nach wassermischbaren und nicht wassermischbaren Kühlschmierstoffen.

Als Basisstoffe für Kühlschmierstoffe werden sowohl Mineralöle als auch Öle aus natürlichen Rohstoffen benutzt.

Mineralöle bestehen vorwiegend aus
- paraffinischen Kohlenwasserstoffen
- naphthenischen Kohlenwasserstoffen
- aromatischen Kohlenwasserstoffen

Öle aus natürlichen Rohstoffen enthalten neben Triglyceriden noch Begleitstoffe wie z.B. freie Fettsäuren, Phosphate, Eiweiß, Kohlenhydrate, Wachse, Farbstoffe oder aromatenhaltige Kohlenwasserstoffe. Durch Raffination wird ein Großteil dieser unerwünschten Begleitstoffe entfernt. Ebenfalls entfernt werden natürliche Inhibitoren wie z.B. Tocopherole oder Vitamin E. Ein grundsätzliches Problem der aus nachwachsenden Rohstoffen hergestellten Öle sind die Doppelbindungen in den Fettsäuren, die sehr reaktiv sind und daher auch relativ leicht mit anderen Verbindungen reagieren. Ein Schutz durch Additive ist nur sehr begrenzt möglich und würde den Vorteil der Fettöle, z.B. die leichte Abbaubarkeit, sehr stark reduzieren. Beim Einsatz in wassermischbaren Kühlschmierstoffen muß durch verstärkte Biozidzugabe der Kühlschmierstoff einerseits mikrobiell resistent gemacht werden, andererseits muß aufgrund der Hydrolyseempfindlichkeit Art und Menge der Emulgatoren stark geändert werden.

Die Kühlschmiermittel enthalten weiterhin zur Verbesserung der anwendungstechnischen Eigenschaften noch Additive wie Haftverbesserer, Emulgatoren, Entschäumungsmittel, Zusätze zur Hochdruckschmierung, Korrosionsschutzstoffe, Detergentien und Viskositätsindexverbesserer

Wassermischbare Kühlschmierstoffe sind stets mikrobiellen Angriffen ausgesetzt. Auch bei ordnungsgemäßem Betrieb ist es praktisch unmöglich, eine Verkeimung mit Bakterien, Hefen oder Pilzen zu verhindern. Die mikrobielle Besiedelung erfolgt dabei über das Anmischwasser, die Oberfläche von Werkstücken und Maschinen, Haut und Kleidung der Arbeiter oder direkt über den Staub der Luft. Mikroorganismen sind daher in wassergemischten Kühlschmierstoffen zwangsläufig immer vorhanden.

Mikroorganismen beeinträchtigen jedoch die Funktion von Kühlschmierstoffen erheblich. Je nach der Stärke der Besiedelung macht sich dieser Funktionsverlust in der Praxis unter anderem durch folgende Erscheinungen bemerkbar:
- Geruchsbildung
- pH-Wert-Abfall
- Absinken des Korrosionsschutzvermögens
- Veränderung der Dispersität und damit des Filtrationsverhaltens
- Instabilität

Der Kühlschmierstoff verliert schnell seine Ausgangseigenschaften und wird dadurch unbrauchbar.

Weiterhin geht von den Mikroorganismen beziehungsweise ihren Stoffwechsel- und Abbauprodukten eine gesundheitliche Gefährdung der Arbeiter aus. Da obligat-pathogene Keime wie Salmonellen, Shigellen und Tuberkelbakterien in der Regel nicht festgestellt werden, liegt das Hauptaugenmerk beim Umgang mit wassergemischten Kühlschmierstoffen auf möglichen opportunistisch-pathogenen sowie auf allergisierend-toxischen Wirkungen der vorkommenden Bakterien und Pilze.

Opportunistisch-pathogene Mikroorganismen sind normalerweise harmlos für den Menschen, können aber in bestimmten Situationen, z.B. bei Schwächung des körpereigenen Abwehrsystems, Infektionen verursachen.

Eine solche Schwächung des Immunsystems kann beispielsweise durch bestimmte therapeutische Behandlungen (z.B. Hormontherapie) und Allgemeinerkrankungen (z.B. Diabetes) sowie durch andere Infektionen hervorgerufen werden.

Sind diese Voraussetzungen gegeben, können bestimmte Keime, die auch schon in Kühlschmierstoffen gefunden wurden (z.B. Pseudomonas, Acinetobacter, Klebsiella, Aspergillus), als Erreger vor allem von Atemwegsinfektionen auftreten.

Weiter sind bei bereits vorgeschädigter Haut, etwa bei Vorliegen eines Kontaktekzems, mikrobielle Superinfektionen der Haut:, z.B. mit Hefen, beschrieben worden. Auch Verletzungen der Haut stellen Eintrittspforten für verschiedene Keime dar, so daß auf eine gute Wundversorgung geachtet werden muß.

Unabhängig von möglichen infektiösen Eigenschaften produzieren Mikroorganismen verschiedene Substanzen, die Allergien bzw. toxische Wirkungen beim Menschen auslösen können. Das Hervorrufen solcher Reaktionen, die beim Umgang mit Kühlschmierstoffen in erster Linie Atemwege und Haut betreffen, hängt vor allem von der Art und Zahl der Keime ab, mit denen der Arbeitnehmer konfrontiert wird.

Bisher wurden den Kühlschmiermitteln zur Verhinderung des Befalls mit Mikroorganismen biocid wirkende Konservierungsmittel zugesetzt vergl. z.B. DE-A-2 462 073, vor allem Formaldehyd-Depotstoffe wie Acetale oder Halbacetale oder Aminale oder Halbaminale mit Hexahydrotriazonen, Imidazolidinen, Oxazolidinen, Bisoxazolidinen oder methylolierten Amiden.

Nachteilig ist jedoch, daß solche Konservierungsmittel ein hohes allergenes und toxisches Potential aufweisen, in relativ hohen Dosen eingesetzt werden müssen und naturgemäß als Rückstände im Kühlschmiermittel enthalten sind.

Aufgabe der vorliegenden Erfindung war es, auf einfache Weise das Problem des Mikroorganismenbefalls von Kühlschmiermitteln zu lösen, ohne daß die geschilderten Nachteile auftreten.

Demgemäß wurde die eingangs definierte Verwendung gefunden.

Die erfindungsgemäß verwendeten Tiefenfilter sind in der WO 95/16511 beschrieben. Es handelt sich dabei um Formkörper auf Basis von Fasermaterialien als Gerüststoffe.

Sie bestehen aus Faserstoffen, wie sie für die Papier- und Filterherstellung bekannt sind. Die biocide Substanz ist partikulär zwischen den Fasern in das dreidimensionale Fasergerüst des Tiefenfilters eingebettet.

Die Tiefenfilter enthalten als biocide Substanz Crospovidone-Iod oder Crospovidone-Wasserstoffperoxid. Mit Crospovidone-Iod wird der erfindungsgemäß verwendete Iodkomplex auf Basis von vernetztem PVP (PVPP, Crospovidone) bezeichnet. Entsprechendes gilt für Crospovidone-wasserstoffperoxid.

Im Gleichgewicht mit dem komplex gebundenen Iod steht das freie Iod. Dieser Anteil als wirksame Komponente wird in einem Konzentrationsbereich von 0,5 bis 6, vorzugsweise 1 bis 3 ppm stets aus dem Iodpool des Komplexes nachgebildet.

Das Iod kann in diesem Komplex in unterschiedlichen Mengen gebunden sein. Die handelsüblichen Produkte enthalten verfügbares Iod zwischen 9,0 und 12,0 Gew.-%, jedoch sind für die vorliegende Erfindung Produkte geeignet mit einem Gehalt an verfügbarem Iod zwischen 1 bis 22 Gew.-%. Die Korngröße des Crospovidone-Iods liegt zwischen 0,5 und 600 µm. Bevorzugt wird Crospovidone-Iod mit einer Korngrößenverteilung zwischen 0,5 und 250 µm verwendet. Die mittlere Korngröße liegt zwischen 30 und 40 µm. Die spezifische Oberfläche der Crospovidone-Iod-Partikel beträgt 0,8 bis 6, vorzugsweise 1,8 bis 2,5 m²/g [BET-Methode] , die Schüttdichte 0,1 bis 0,35, vorzugsweise 0,18 bis 0,25 g/ml.

Die Tiefenfilter können als biocide Substanz auch Crospovidone-Wasserstoffperoxid enthalten, das ebenfalls partikulär zwischen den Fasern des Filters eingebettet ist und in den gleichen Mengen eingesetzt werden kann.

Das Crospovidone-Iod ist in den Tiefenfiltern in Mengen zwischen 0,5 und 75 Gew.-%, bevorzugt 10 bis 50 Gew.-%, besonders bevorzugt 20 bis 40 Gew.-%, bezogen auf das Gesamtgewicht des Tiefenfilters enthalten. Diese Mengen hängen einerseits von der im Crospovidone-Iod enthaltenen Menge an verfügbarem Iod und andererseits von der Art des zu reinigenden Materials ab. In einem Schichtenfilter selbst können Tiefenfilter mit verschiedenen Mengen an Crospovidone-Iod eingesetzt werden.

Die Tiefenfilter bestehen aus Faserstoffen, wie sie für die Papier- und Filterherstellung bekannt sind, insbesondere Zellstoffasern. Ein geeigneter Faserstoff ist z. B. mikronisierter Zellstoff aus reiner Alpha-Zellulose mit einem Glührückstand von maximal 0,3 %. Die Faserlänge der verwendeten Alpha-Zellulose kann im Bereich von 10 bis 300 µm und vorzugsweise 18 bis 200 µm liegen, wobei eine durchschnittliche Faserdicke von 5 bis 30 µm zweckmäßig ist.

Zur Einstellung des erforderlichen Oberflächenpotentials können verschiedene Additive zugegeben werden. Zur Erzielung eines positiven Oberflächenpotentials kann man ein Polyamido-Aminepichlorhydrin-Harz, für ein negatives Oberflächenpotential modifizierte Galaktomannane oder Polyacrylamide zugeben. Durch Verwendung von anionischen Retentionshilfsmitteln kann ebenfalls ein negatives Oberflächenpotential erzielt werden.

Als Ersatz für die Zellulose oder zusätzlich zu der Zellulose ist es zweckmäßig, Polyolefinfasern, z. B. ein Polypropylenfibrid oder ein Polyethylenfibrid (PE-Fibrid) zuzusetzen. Ein solches PE-Fibrid kann beispielsweise eine Faserlänge von 50 bis 500 µm und eine Faserdicke von 0,1 bis 30 µm haben. Die Menge der zugesetzten Polyolefinfaser liegt im Bereich von 1 bis 60 Gew.-%, bezogen auf alle in der jeweiligen Filterschicht enthaltenen Bestandteile (Trockengewicht) und beträgt vorzugsweise 5 bis 25, und ganz besonders bevorzugt, ca. 10 Gew.-%.

Die Tiefenfilter können auch ausschließlich aus einem Polyolefinfibrid als Fasermaterialien bestehen.

Weiterhin kann es vorteilhaft sein, in die Filterschicht hochdispersives Polymergranulat einzuarbeiten. Besonders geeignet sind hierfür beispielsweise Harnstoff-Formaldehyd-Kondensate mit einer Primärteilchengröße von 0,1 bis 5 µm und einer spezifischen Oberfläche von 20 +/- 5 m²/g (BET-Methode) und Agglomeraten von Primärteilchen in der Größe zwischen 3 und 300 µm. Diese Polymergranulate können in Mengen von 1 bis 60 Gew.-% vorzugsweise 5 bis 20 Gew.-% verwendet werden. Auch Kieselgur oder Perlite können anstelle oder zusätzlich zu dem Polymergranulat innerhalb der angegebenen Menge von 1 bis 60 Gew.-% zugegeben werden, sofern sichergestellt ist, daß keine Metallionen daraus abgegeben werden oder abgegebene Metallionen an einer anderen Stelle des Filters festgehalten werden, oder abgegebene Metallionen im zu gewinnenden Filtrat nicht stören oder gegebenenfalls sogar erwünscht sind.

Bei der Herstellung der Tiefenfilter werden Verfahren und Vorrichtungen angewendet, wie sie für die Herstellung von üblichen Filtermaterialien verwendet werden. Für eine typische Verfahrensweise stellt man beispielsweise eine in der Papierindustrie übliche Pulpe in einem geeigneten Pulper her. Zur Herstellung dieser Pulpe verwendet man Faserstoffe, also beispielsweise Zellstoffe oder Polyolefinfasern, die zuvor in geeigneten Mahlaggregaten, z.B. Kegel-Refinern, fibrilliert wurden. Zu der so erhaltenen Suspension gibt man dann die für den jeweiligen Filteraufbau geeigneten Stoffe zu, also beispielsweise Harze, welche die Naßfestigkeit erhöhen und/oder das Zeta-Potential beeinflussen sowie das teilchenförmige Crospovidone-Iod in der geeigneten Menge etc.. Das Crospovidone-Iod kann aber auch schon vorher zu der Pulpe zugesetzt werden.

Die wäßrige Suspension mit allen in der Rezeptur vorgesehenen Inhaltsstoffen wird dann auf ein Sieb gegeben und dort schonend entwässert so daß man hochporöse Strukturen mit sehr hohem Trübaufnahmevermögen erhält. Anschließend erfolgt die Trocknung, üblicherweise in temperaturgesteuerten Mehretagentrocknern, wobei man die Trockentemperatur so regelt, daß die in der Mischung enthaltenen temperaturempfindlichen Komponenten nicht geschädigt werden. Hier soll die Trocknungstemperatur beispielsweise unterhalb der Erweichungstemperatur von im Filter enthaltenen Polyolefinfibriden liegen, üblicherweise im Bereich von 130°C.

Die Crospovidone-Iod oder Crospovidone-H₂O₂ enthaltenden Tiefenfilterpapiere haben im allgemeinen eine Dicke von 0,1 bis 10 mm. Das Flächengewicht der einzelnen Filterpapiere kann in weiten Bereichen variieren und liegt zwischen 20 g/m² und 2500 g/m². Der Aschegehalt der Filter variiert nach Art und Menge der im Filterpapier enthaltenen Stoffe. Er ist nicht kritisch, weil es nicht auf die im Filter zurückgehaltenen Substanzen ankommt, sondern auf die Reinheit des nach dem Filtrieren erhaltenen Filtrates.

Erfindungsgemäß können auch Schichtenfilter verwendet werden. Schichtenfilter (Filterpressen) sind aus dem Stand der Technik bekannt. Sie enthalten ein oder mehrere Tiefenfilterschichten, durch welche die zu reinigende Flüssigkeit läuft, wobei die Schichtenfilter je nach Bedarf als Druck-, Saug- und hydrostatische Filter betrieben werden. Üblicherweise werden Tiefenfilter durchströmt, wobei die Schichten im Tiefenfilter unterschiedlich ausgebildet sein können, indem man z.B. die Art und die Dichte und/oder die Porengröße der Filterschichten variiert. In dem Schichtenfilter, der sich aus ein oder mehreren Tiefenfilterschichten bzw. Tiefenfilterpapieren aufbaut, ist in den Filterschichten Crospovidone-Iod oder Crospovidone-H₂O₂, bevorzugt in Mengen von 10 bis 50 Gew.-%, besonders bevorzugt 20 bis 40 Gew.-% enthalten.

Bei der praktischen Anwendung des erfindungsgemäß verwendeten Tiefenfilters wird das Kühlschmiermittel auf das Filter aufgegeben. In der Regel erfolgt die Zugabe von oben, so daß am unteren Ende des Tiefenfilters die gereinigte Flüssigkeit gewonnen wird. Dabei arbeitet man zweckmäßigerweise mit einer Druckdifferenz über den gesamten Filter von oben nach unten von bis zu 5 bar. Die in die Poren der Schicht bzw. des Gefüges eindringenden Teilchen einschließlich Bakterien, Pilze oder Viren werden durch das in diesen Schichten vorliegende Crospovidone-Iod abgetötet bzw. inaktiviert, und die Rückstände setzten sich an der inneren Oberfläche und in den Hohlräumen der Schichten ab.

Für die Wirkungsweise und Effizienz der erfindungsgemäßen Tiefenfilter ist die durchschnittliche Verweilzeit der zu reinigenden Flüssigkeit beim Durchfließen des Tiefenfilters von erheblicher Bedeutung. Die Kontaktzeiten betragen 0,1 bis 5 min, vorzugsweise 1 bis 2 min. Diese Verweilzeit wird einerseits durch die Tiefe des zu durchströmenden Filterbettes als auch den inneren Aufbau der einzelnen Filterschichten beeinflußt. Es ist anzustreben, daß bei einer gegebenen Tiefe des Tiefenfilters eine optimale, zur Erzielung der bakteriziden, fungiziden und viruziden Eigenschaften ausreichende Verweilzeit sich einstellt. Der Kontakt der zu behandelnden Flüssigkeit mit der biociden Substanz im Gefüge des Tiefenfilters aufgrund der ständig wechselnden, meist stark turbulenten Strömungszustände in den Poren und Kanälen des Tiefenfilters ist sehr intensiv und dadurch ist die Wirksamkeit selbst bei sehr kurzen Kontaktzeiten höher als bei den Verfahren des vorerwähnten Standes der Technik. Durch die Kombination von biocider Substanz enthaltenden Tiefenfilterschichten mit Crospovidone enthaltenden Tiefenfilterschichten (in dieser Reihenfolge) kann eventuell noch im Produkt befindliches Iod oder H₂O₂ quantitativ entfernt werden. Diese Kombination kann je nach gewünschter Kontaktzeit in zwei verschiedenen Apparaten nacheinander oder durch Aufeinanderlegen der beiden Tiefenfilterschichten mit und ohne Spacer zwischen ihnen bewirkt werden.

Die mit Crospovidone-Iod oder Crospovidone-H₂O₂ ausgerüsteten Tiefenfilterschichten bzw. Filterpapiere können auch in Filterpressen verwendet werden oder in Filterschichtenmodule oder in Filterkerzen in plissierter Form eingebaut werden.

Mit Hilfe der Tiefenfilter lassen sich Kühlschmierstoffe auf einfache Weise von Mikroorganismen befreien. Die Kombination der ohnehin erforderlichen Filtration mit einer biociden Behandlung bietet verfahrenstechnische wie wirtschaftliche Vorteile. Die Verfahrensführung kann dabei so gestaltet werden, daß man lediglich im Bedarfsfall, d.h. beim Einsetzen einer mikrobiologischen Gefährdung, die Gesamtmenge des Kühlschmiermittels einer bioziden Filtration unterzieht. Alternativ kann auch so verfahren werden, daß eine gewisse Menge des Kühlschmiermittels kontinuierlich im Bypass über die PVPP-Iod haltigen Filtermedien zirkuliert. Beide Verfahren haben den Vorteil, daß vergleichsweise geringe, in jedem Fall aber ausreichende Mengen an biozider Substanz zur Verfügung steht. Vorteilhaft ist auch, daß die Kühlschmiermittel frei von Rückständen an biocider Substanz sind. Da bisher auch keine Resistenzen gegen Crospovidone-Iod oder Crospovidone-H₂O₂ bekannt sind, ist eine sichere Abtötung der Mikroorganismen gewährleistet.

Die in den nachstehenden Beispielen eingesetzten Tiefenfilterschichten wurden wie folgt hergestellt:

Eine Zellstoffmischung aus hochgebleichten Sulfit- und Sulfatzellstoffen von Laub- und Nadelhölzern wurde in wäßriger Suspension (Pulpe) auf einen Mahlgrad von ca. 40° SR (Schopper Riegler) in Kegelrefinern gemahlen.

Zu 50 Gewichtsteilen dieser Zellstoffmischung (bezogen auf Trockensubstanz) wurden 5 Gewichtsteile Polyethylenfibrid (PEFibrid, Type: ESS 21 der Fa. Schwarzwälder Textilwerke), 10 Gew.-% partikuläres Harnstoff-Formaldehyd-Kondensat (Agglomerate zwischen 6 und 60 mm) und 35 Gew.-% Crospovidone-Iod (Korngrößenverteilung 0,5 - 250 mm) zugesetzt. Die Naßverfestigung erfolgte durch Beigabe von ca. 0,5 Gew.-% Polyaminepichlorhydrin-Harz. Die homogene Suspension dieser Inhaltsstoffe wurde auf einem kontinuierlich laufenden Langsieb auf ca. 30-35 % TS entwässert, wobei eine sehr poröse Struktur gebildet wird. Anschließend wird die nasse Filterschicht bei 130 bis 140°C in einem kontinuierlich betriebenen Etagentrockner bis zu einer Restfeuchte < 1% getrocknet und danach auf Format geschnitten. Das Ergebnis ist eine naßfeste, bakterizid, fungizid und viruzid wirkende Filterschicht zur Feinfiltration mit einer Porenverteilung zwischen 0,05 und 30 µm, wobei 90 % aller Poren zwischen 4 und 6 µm liegen (Meßprinzip: Coulter Porometer II) einer flächenbezogenen Masse von 1200 ± 50 g/m² und einer Dicke von 4 ± 0,5 mm.

Spezifikation des eingesetzten Crospovidone-Iod:

| Bezeichnung: | Crospovidone-Iod: |
|---|---|
| Stickstoffgehalt | 9,1 - 11,5% |
| Schwermetallgehalt | ≤ 10 ppm |
| Trocknungsverlust | ≤ 6% |
| Asche | < 0,3% |
| Verfügbares Iod | 9-12,0% |
| Freies Iod | 1-3 ppm |
| (10 Gew.-%ige Suspension in H₂O) | |

### Beispiel 1

### Entkeimung bakterienhaltiger Kühlschmierstoffe

Die so hergestellten Tiefenfilterschichten wurden einer Validierung mit einem Kühlschmiermittel (Avilub Metacon BLU), (bestehend aus Mineralöl, Emulgatoren, Korrosionsschutzmittel, Cu(II)-Komplex, biocidfrei), das Bakterien enthielt in Anlehnung an die Testmethode "4.2. Titerreduktion" des Arbeitskreises Technik/ Analytik in der Europäischen Fachvereinigung Tiefenfiltration e.V. unterzogen. Diese Testmethode lehnt sich an DIN 58355, Teil 3 "Bakterienrückhaltevermögen von Membranfiltern" an.

Bei den durchgeführten Tests wurde eine entsprechend dem Herstellungsbeispiel produzierte Filterschicht mit einer identischen Filterschicht verglichen, bei der der Crospovidone-Iod-Anteil durch die Zellstoffmischung, und einer ebenfalls identisch hergestellten Filterschicht, bei der der Crospovidone-Iod-Anteil durch eine Kieselgur-/Perlitemischung ersetzt wurde.

Die Ergebnisse werden in LRV-Werten angegeben.
(LRV = logarithmic reduction value)

| Ergebnisse: | | LRV |
|---|---|---|
| 1. | Tiefenfilter mit 35 % Crospovidone-Iod | 10 |
| 2. | Tiefenfilter ohne Crospovidone-Iod | 2 |
| 3. | Tiefenfilter mit 35 % Kieselgur/Perlite-Anteil | 3 |

Das heißt, daß die Tiefenfilterschicht mit 35 % Crospovidone-Iod (1) bei einer Belastung von 10¹⁰ Keimen pro 20 cm² in 100 ml Unfiltrat noch ein steriles Filtrat liefert. Bei gleicher Belastung liefert die Zellstoffschicht (2) ein Filtrat mit 10⁸ Keimen in 100 ml und die Klärfilterschicht (3) ein Filtrat mit 10⁷ Keimen in 100 ml. D.h. die Tiefenfilterschicht mit Crospovidone-Iod hat eine um 7 Zehnerpotenzen bessere Entkeimungsleistung verglichen mit üblichen Filterschichten.

### Beispiel 2

Die Tiefenfilterschichten wurden einer Validierung mit einem Kühlschmiermittel (Oemeta HF AS) das Sporen von Schimmelpilzen enthielt in Anlehnung an die Testmethode "4.2. Titerreduktion" des Arbeitskreises Technik/Analytik in der Europäischen Fachvereinigung Tiefenfiltration e.V. unterzogen. Diese Testmethode lehnt sich an DIN 58355, Teil 3 "Bakterienrückhaltevermögen von Membranfiltern" an.

Bei den durchgeführten Tests wurde eine entsprechend dem Herstellungsbeispiel produzierte Filterschicht mit einer identischen Filterschicht verglichen, bei der der Crospovidone-Iod-Anteil durch die Zellstoffmischung, und einer ebenfalls identisch hergestellten Filterschicht, bei der der Crospovidone-Iod-Anteil durch eine Kieselgur-/Perlitemischung ersetzt wurde.

Die Ergebnisse werden in LRV-Werten angegeben.
(LRV = logarithmic reduction value)

| Ergebnisse: | | LRV |
|---|---|---|
| 1. | Tiefenfilter mit 35 % Crospovidone-Iod | 7 |
| 2. | Tiefenfilter ohne Crospovidone-Iod | 2 |
| 3. | Tiefenfilter mit 35 % Kieselgur/Perlite-Anteil | 3 |

Das heißt, daß die Tiefenfilterschicht mit 35 % Crospovidone-Iod (1) bei einer Belastung von 10⁷ Keimen pro 20 cm² in 100 ml Unfiltrat noch ein steriles Filtrat liefert. Bei gleicher Belastung liefert die Zellstoffschicht (2) ein Filtrat mit 10⁵ Keimen in 100 ml und die Klärfilterschicht (3) ein Filtrat mit 10⁴ Keimen in 100 ml. D.h. die Tiefenfilterschicht mit Crospovidone-Iod hat eine um 4 Zehnerpotenzen bessere Entkeimungsleistung verglichen mit üblichen Filterschichten.

## Patentansprüche

1. Verwendung von Tiefenfiltern
auf Basis von Fasermaterialien,
enthaltend
Crospovidone-Iod oder Crospovidone-Wasserstoffperoxid als biocide Substanz,
wobei die biocide Substanz partikulär zwischen den Fasern eingebettet ist,
zur Behandlung von Kühlschmierstoffen gegen Mikroorganismen

2. Verwendung nach Anspruch 1, wobei die Tiefenfilter 0,5 bis 75 Gew.% an Crospovidone-Iod, bezogen auf das Gesamtgewicht des Filters, enthalten.

3. Verwendung nach Anspruch 1 oder 2, wobei die Tiefenfilterschichten in Form von Schichtmodulen angeordnet sind.

## Claims

1. The use of depth-type filters
based on fibrous materials,
comprising
crospovidone-iodine or crospovidone-hydrogen peroxide as biocidal substance,
where the biocidal substance is embedded as particles between the fibers,
for the antimicrobial treatment of cooling lubricants

2. The use as claimed in claim 1, wherein the depth-type filters comprise 0.5 to 75 % by weight of crospovidone-iodine, based on the total weight of the filter.

3. The use as claimed in claim 1 or 2, wherein the depth-type filter layers are arranged in the form of layer modules.

## Revendications

1. Utilisation de filtres à lit profond
à base de matières fibreuses,
contenant
du Crospovidone-iode ou du Crospovidone-peroxyde d'hydrogène en tant que substance biocide,
la substance biocide étant à l'état de particules enrobées dans les fibres, pour le traitement des lubrifiants-réfrigérants contre les microorganismes.

2. Utilisation selon revendication 1, dans laquelle les filtres à lit profond contiennent 0,5 à 75% en poids de Crospovidone-iode sur le poids total du filtre.

3. Utilisation selon revendication 1 ou 2, dans laquelle les couches des filtres à lit profond sont disposées sous la forme de modules de couches.
